# EUROPÄISCHE PATENTSCHRIFT

(11) **EP 4 390 365 B1**
(45) Veröffentlichungstag und Bekanntmachung des Hinweises auf die Patenterteilung: **01.07.2026**
(21) Anmeldenummer: 22216474.1
(22) Anmeldetag: 23.12.2022
(51) Int. Cl.: G01N 15/06, G01N 15/14, G01N 21/64, G01N 21/94

(54) **VERFAHREN ZUM PRÜFEN EINER OBERFLÄCHE EINES PRÜFLINGS UND SYSTEM ZUM PRÜFEN EINER OBERFLÄCHE EINES PARTIKELFILTERS**
METHOD FOR TESTING A SURFACE OF A TEST OBJECT AND SYSTEM FOR TESTING A SURFACE OF A PARTICLE FILTER
PROCÉDÉ DE CONTRÔLE D'UNE SURFACE D'UN ÉCHANTILLON ET SYSTÈME DE CONTRÔLE D'UNE SURFACE D'UN FILTRE À PARTICULE

(43) Veröffentlichungstag der Anmeldung: 26.06.2024
(73) Patentinhaber: Fraunhofer-Gesellschaft zur Förderung der angewandten Forschung e.V., 80686 München (DE)
(72) Erfinder: BLÄTTERMANN, Alexander, 79110 Freiburg (DE); BUCHTA, Dominic, 79110 Freiburg (DE); SCHÜTZ, Jan, 79110 Freiburg (DE); KARDAMAKI, Evangelia, 79110 Freiburg (DE)
(74) Vertreter: WSL Patentanwälte Partnerschaft mbB

(56) Entgegenhaltungen:
- EP-A2- 1 775 571
- EP-B1- 1 611 431
- PRICE JEFFERY R. ET AL: "New developments in image-based characterization of coated particle nuclear fuel", vol. 6070H10, 23 January 2006 (2006-01-23), pages 60700, XP093052866, ISSN: 0277-786X, Retrieved from the Internet <URL:http://citenpl.internal.epo.org/wf/storage/1889B152FF1000AA29D/originalPdf#zoom=100> DOI: 10.1117/12.647834

## Beschreibung

Die vorliegende Erfindung betrifft ein Verfahren zum Prüfen einer Oberfläche eines Prüflings, wobei das Verfahren ein Erkennen eines Partikels auf der Oberfläche umfasst, wobei das Erkennen die Schritte aufweist: Beleuchten der Oberfläche und des Partikels mit elektromagnetischer Anregungsstrahlung mit einer Anregungswellenlänge, Erfassen einer ortsaufgelösten Lumineszenzleistung einer von dem Prüfling abgestrahlten Lumineszenzstrahlung mit einer von der Anregungswellenlänge verschiedenen Lumineszenzwellenlänge und Erzeugen eines Lumineszenzbilds aus der ortsaufgelösten Lumineszenzleistung, wobei der Prüfling ein Prüflingsmaterial umfasst und das Partikel ein Partikelmaterial umfasst.

Die vorliegende Erfindung betrifft darüber hinaus ein System zum Prüfen einer Oberfläche eines Partikelfilters, wobei das System eine Beleuchtungseinrichtung, eine Erfassungseinrichtung mit einer Lumineszenzlichtkamera und eine Auswerteeinrichtung aufweist, wobei die Beleuchtungseinrichtung derart eingerichtet und angeordnet ist, dass in einem Betrieb des Systems die Oberfläche mit elektromagnetischer Anregungsstrahlung mit einer Anregungswellenlänge beleuchtbar ist, wobei die Erfassungseinrichtung derart eingerichtet ist, dass mit der Lumineszenzlichtkamera in dem Betrieb des Systems ein Lumineszenzbild einer von dem Prüfling abgestrahlten Lumineszenzstrahlung mit einer Lumineszenzwellenlänge erfassbar ist, wobei die Lumineszenzwellenlänge von der Anregungswellenlänge verschieden ist, wobei die Auswerteeinrichtung derart wirksam mit der Erfassungseinrichtung verbunden ist, dass die Auswerteeinrichtung in dem Betrieb des Systems das Lumineszenzbild von der Erfassungseinrichtung empfängt.

Zum Erkennen von partikelartigen Verunreinigungen auf Bauteiloberflächen sind aus dem Stand der Technik eine Reihe von optischen Messverfahren und -systemen bekannt. Diese können zum Teil zusätzlich auch die individuellen Partikel nach der Art der Partikel klassifizieren.

Im Rahmen der technischen Sauberkeit von Oberflächen (vgl. Prüfnorm VDA19) ist das Erkennen von individuellen Partikeln auf der zu prüfenden Oberfläche von entscheidender Bedeutung. Beispielsweise gilt es, nach einer Reinigung einer Oberfläche festzustellen, ob und wie viele Partikel noch auf der Oberfläche verblieben sind und ggf. aus welchem Material diese Partikel sind. Dazu werden von einer bereits gereinigten Oberfläche die nach dem Reinigen verbliebenen Partikel mit einem Reinigungsfluid extrahiert und der Fluidstrom mit den Partikeln durch ein technisches Filter geleitet. Bei dem Reinigungsfluid kann es sich um ein flüssiges Reinigungsmittel zum Abspülen oder um ein Gas zum Absaugen der verbliebenen Partikel handeln. Die abgespülten oder abgesaugten Partikel lagern sich dabei auf dem Filter ab. Anschließend wird das Filter aus der Extraktionseinheit entfernt und beispielsweise mithilfe eines Auflichtmikroskops untersucht.

Für die Untersuchung solcher Filter hat sich ein System etabliert, so wie es in dem deutschen Patent DE 10 2005 062 439 B3 beschrieben ist. Dabei wird das Filter mit polarisiertem weißem Licht beleuchtet. Das von der Oberfläche des Filters und den Partikeln gestreute oder reflektierte Licht wird anschließend unter Zuhilfenahme einer gekreuzten Polarisator-/Analysator-Anordnung untersucht. Durch die gekreuzten Polarisatoren, werden direkte Reflexionen von metallischen Partikeln unterdrückt, wodurch die metallischen Partikel dunkel auf hellem Hintergrund erscheinen. Anhand dieses Bildes werden dann mittels Bildverarbeitung die Größen der individuellen Partikel bestimmt. Anschließend wird der Polarisator gegenüber dem Analysator gedreht und ein zweites Bild aufgenommen. Jetzt erscheinen die metallischen Partikel hell, wohingegen beispielsweise Kunststoffmaterialien vergleichsweise dunkel erscheinen. Auf diese Weise kann nach dem Erkennen der Partikel auch eine Klassifikation in metallische und nicht metallische Partikel vorgenommen werden.

Die EP 1 611 431 B1 offenbart ein Verfahren zum Nachweis von Oberflächenpartikeln, insbesondere von Metallpartikeln, in Halbleitern wie Silizium, um Fehler zu charakterisieren, die sich wahrscheinlich auf die elektrische Aktivität solcher Halbleitermaterialien auswirken. Das Verfahren umfasst das Belichten der Oberfläche der Halbleiterstruktur in der Nähe eines Oberflächenpartikels mindestens einem hochintensiven Lichtstrahl auszusetzen und die Photolumineszenzantwort zu erfassen und zu verarbeiten. Das Ergebnis wird verwendet, um inakzeptable Kontaminationsniveaus zu identifizieren, die aus der Diffusion von Verunreinigungen der Partikel in die Halbleiterstruktur resultieren.

Ein erheblicher Nachteil der Verfahren aus dem Stand der Technik ist ihre vergleichsweise lange Dauer. Die bekannten Verfahren sind nicht für Messungen in Echtzeit und damit nicht für In-Line-Messungen geeignet. Darüber hinaus muss bei den bekannten Verfahren das Filter immer aus der Extraktionseinheit entfernt werden und in einem Labor analysiert werden, was die Verfahren grundsätzlich für eine In-Line-Messung nicht geeignet macht. Darüber hinaus geraten die bekannten Verfahren, die auf weißem Licht beruhen, bei hellen Partikeln an ihre Grenzen.

Gegenüber dem Stand der Technik ist es eine Aufgabe der vorliegenden Erfindung, ein Verfahren bereitzustellen, das zumindest einen der zuvor genannten Nachteile vermeidet.

Zur Lösung zumindest einer dieser Aufgaben wird erfindungsgemäß ein Verfahren gemäß dem beigefügten unabhängigen Anspruch 1 vorgeschlagen. Dazu weist das Verfahren der eingangs genannten Art beim Erkennen des Partikels den Schritt auf: Identifizieren eines Bereichs des Lumineszenzbilds als das Partikel, wenn der Bereich eine Lumineszenzleistung aufweist, die kleiner ist als ein Lumineszenzleistungsschwellenwert, wobei das Prüflingsmaterial bei der Anregungswellenlänge stärker luminesziert als das Partikelmaterial.

Der vorliegenden Erfindung liegt die Idee zugrunde, einen Prüfling bzw. eine Oberfläche des Prüflings, dessen Prüflingsmaterial bei der Anregungswellenlänge eine starke Lumineszenz aufweist, als "Hintergrundbeleuchtung" zu verwenden. Ein auf der Oberfläche angeordnetes Partikel zeichnet sich als "dunkler" Flecken oder Bereich auf der Oberfläche ab. Voraussetzung dafür ist, dass das Partikelmaterial des Partikels bei der Anregungswellenlänge eine geringere Lumineszenz aufweist als das Prüflingsmaterial.

Auf diese Weise lassen sich mit dem erfindungsgemäßen Verfahren alle individuellen Partikel auf der Oberfläche des Prüflings erkennen und optional ihre Position markieren. Das erfindungsgemäße Verfahren ist grundsätzlich auf alle Kombinationen aus einem Prüfling, der ein Prüflingsmaterial umfasst, und einem Partikel, das ein Partikelmaterial umfasst, wobei das Prüflingsmaterial bei der Anregungswellenlänge stärker luminesziert als das Partikelmaterial, anwendbar.

Im Sinne der vorliegenden Anmeldung bezeichnet Lumineszenz immer eine Lumineszenz aufgrund einer Anregung mit elektromagnetischer Strahlung (Photolumineszenz) und umfasst sowohl Phosphoreszenz als auch Fluoreszenz.

Im Sinne der vorliegenden Anmeldung können sowohl die Anregungswellenlänge als auch die Lumineszenzwellenlänge Bestandteil jeweils eines Wellenlängenbereichs mit einer vorgegebenen Bandbreite sein. Beispielsweise ist in einer Ausführungsform die Anregungswellenlänge die Schwerpunktswellenlänge eines Anregungswellenlängenbereichs und die Lumineszenzwellenlänge ist die Schwerpunktswellenlänge eines Lumineszenzwellenlängenbereichs.

Es versteht sich, dass die Anregungswellenlänge so zu wählen ist, dass sie innerhalb der Absorptionswellenlängen des Prüflingsmaterials des Prüflings liegt, die zu einer Lumineszenz des Prüflingsmaterials führen.

Mit dem erfindungsgemäßen Verfahren lassen sich zunächst einmal die individuellen Partikel erkennen. Alle Bereiche des Lumineszenzbilds, mit einer Lumineszenzleistung, die kleiner ist als der Lumineszenzleistungsschwellenwert, werden als Partikel auf der Oberfläche des Prüflings identifiziert.

Dabei ist der Lumineszenzleistungsschwellenwert ein Wert für die Lumineszenzleistung, unterhalb dessen davon ausgegangen werden muss, dass die Oberfläche des Prüflings von einem Partikel mit einer geringeren Lumineszenz als das Prüflingsmaterial bedeckt bzw. abgeschattet ist.

Nachdem die Partikel erkannt sind, werden die individuellen Partikel in einer Ausführungsform der Erfindung klassifiziert.

Dabei kann ein Klassifizieren der einzelnen erkannten Partikel auf der Oberfläche bereits anhand des Lumineszenzbilds erfolgen. Dabei können beispielsweise die einzelnen Partikel nach Ihrer Größer klassifiziert werden. Dazu werden in einem Beispiel die Pixel des Lumineszenzbilds in einem Bereich mit einer Lumineszenzleistung, die kleiner ist als der Lumineszenzleistungsschwellenwert, gezählt und so die Größe der individuellen Partikel erfasst.

Ferner weist das Klassifizieren in einer Ausführungsform der Erfindung die Schritte auf: Erfassen einer physikalischen Eigenschaft des Partikels und Einordnen des Partikels in mindestens eine erste und eine zweite Klasse anhand der erfassten physikalischen Eigenschaft. In einer Ausführungsform der Erfindung ist die physikalische Eigenschaft des Partikels, die zum Klassifizieren des Partikels herangezogen wird, von der Lumineszenzleistung verschieden. Ein Beispiel für eine solche physikalische Eigenschaft des Partikels, welche das Klassifizieren ermöglicht, ist beispielsweise die elektrische Leitfähigkeit des Partikels oder seine Dichte.

In einer Ausführungsform der Erfindung wird jedes erkannte Partikel auf der Oberfläche des Prüflings individuell klassifiziert.

In einer Ausführungsform der Erfindung erfolgt das Klassifizieren des Partikels mit einem optischen Verfahren. Daher ist in einer Ausführungsform der Erfindung die physikalische Eigenschaft eine optische Eigenschaft des Partikels. In einer Ausführungsform der Erfindung ist die optische Eigenschaft ausgewählt aus einem Reflexionsgrad, einem Polarisationsgrad, einer wellenlängenabhängigen Absorption oder Reflexion, d.h. einer Farbinformation, und einer Lumineszenzlebensdauer.

In einer Ausführungsform jedoch ist die physikalische Eigenschaft des Partikels, die zum Klassifizieren herangezogen wird, die Lumineszenzleistung des Partikelmaterials des Partikels.

Gemäß einer Ausführungsform der Erfindung wird für das Klassifizieren des Partikels die von dem Partikel reflektierte oder gestreute Anregungsstrahlung erfasst. Dieser Ausführungsform liegt die Idee zugrunde, dass Partikel, die aus voneinander verschiedenen Partikelmaterialien bestehen oder die voneinander verschiedene Partikelmaterialien umfassen, einen unterschiedlichen Glanz aufweisen. Dabei wird unter dem Glanz die Fähigkeit einer Oberfläche verstanden, elektromagnetische Strahlung dem Reflexionsgesetz folgend zu reflektieren. Demgegenüber steht die diffuse Streuung an Oberflächen mit einer höheren Rauheit. Eine solche diffuse Streuung wird als Mattheit der Oberfläche wahrgenommen.

Zwei unterschiedliche Partikelmaterialien weisen in der Regel voneinander verschiedenen Glanz auf. Erfasst man daher die Leistung der elektromagnetischen Strahlung, die von einem Partikel unter einem gegebenen Winkel reflektiert wird, so bildet diese Reflexion ein Maß für den Glanz der Oberfläche.

Da die Anregungsstrahlung für das Erkennen des jeweiligen Partikels ohnehin erforderlich ist, reduziert eine Ausführungsform, bei welcher Klassifizieren anhand der von dem Partikel reflektierten oder gestreuten Anregungsstrahlung erfolgt, den apparativen Aufwand erheblich.

Gemäß einer Ausführungsform der Erfindung wird für das Klassifizieren ein Streubild des Partikels bei der Anregungswellenlänge erfasst. Dabei wird unter dem Streubild ein Bild der Szenerie aus der Oberfläche des Prüflings und dem oder den darauf vorhandenen Partikeln bei Beleuchtung mit der Anregungsstrahlung verstanden.

In einer Ausführungsform der Erfindung wird die von dem Partikel in einer Richtung im Wesentlichen senkrecht zu der Oberfläche des Prüflings reflektierte oder gestreute Anregungsstrahlung erfasst. Die so erfasste reflektierte oder gestreute Anregungsstrahlung kann auch als direkte Streuung bezeichnet werden.

Befinden sich auf einer Oberfläche zwei Partikel, von denen eines aus Metall und das andere aus Kunststoff besteht, so ist zu erwarten, dass das Metallpartikel zumindest einen Oberflächenabschnitt aufweist, der eine direkte Streuung oder Reflexion zeigt. Das Metallpartikel wird in dem Streulichtbild zumindest einen hellen Fleck oder Punkt generieren. Demgegenüber wird das Kunststoffpartikel in dem Streulichtbild eher mit gleichmäßiger Helligkeitsverteilung und insgesamt dunkler erscheinen als das Metallpartikel. Setzt man Schwellenwerte für die von einem Partikel direkt gestreute Leistung der Anregungsstrahlung, so kann anhand dieser Schwellenwerte das jeweils betrachtete Partikel individuell in eine Mehrzahl von Klassen eingeordnet werden.

Gemäß einer Ausführungsform der vorliegenden Erfindung umfasst das Beleuchten der Oberfläche mit dem Partikel mit der Anregungsstrahlung ein Beleuchten mit einer bezogen auf die Oberfläche ersten Beleuchtungsrichtung und ein Beleuchten mit einer bezogen auf die Oberfläche der zweiten Beleuchtungsrichtung, wobei das Erfassen der von dem Partikel reflektierten oder gestreuten Anregungsstrahlung die Schritte umfasst: Erfassen eines ersten Streubilds des von der Anregungsstrahlung aus der ersten Beleuchtungsrichtung beleuchteten Partikels mit einer bezogen auf das Partikel ersten Beobachtungsrichtung und Erfassen eines zweiten Streubilds des von der Anregungsstrahlung aus der zweiten Beleuchtungsrichtung beleuchteten Partikels mit einer bezogen auf das Partikel zweiten Beobachtungsrichtung, wobei entweder a) die erste Beleuchtungsrichtung und die zweite Beleuchtungsrichtung voneinander verschieden sind sowie die erste Beobachtungsrichtung und die zweite Beobachtungsrichtung gleich sind oder b) die erste Beleuchtungsrichtung und die zweite Beleuchtungsrichtung gleich sind sowie die erste Beobachtungsrichtung und die zweite Beobachtungsrichtung voneinander verschieden sind und wobei das Einordnen des Partikels in mindestens die erste und die zweite Klasse die Schritte umfasst: Berechnen eines Maßes für eine Ähnlichkeit zwischen dem ersten Streubild und dem zweiten Streubild und Einordnen des Partikels in mindestens die erste und die zweite Klasse anhand des berechneten Maßes für die Ähnlichkeit.

Da die diffuse Streuung an einer rauen Oberfläche ein statistischer Prozess ist, unterscheiden sich zwei unter verschiedenen Beleuchtungsbedingungen bei identischer Beobachtungsrichtung erfasste oder zwei unter identischen Beleuchtungsbedingungen aus zwei unterschiedlichen Beobachtungsrichtungen erfasste Streubilder einer Oberfläche mit geringem Glanz nicht oder nur in einem geringen Maße. Bei einem Partikel mit einem hohen Glanz, d.h. einem hohen Anteil an Reflexion, hingegen ändert sich die Reflexion in Abhängigkeit von der Beleuchtungsrichtung und/oder der Beobachtungsrichtung deutlich.

Entscheidend für die Realisierung dieser Ausführungsform des Verfahrens ist, dass für die beiden zu vergleichenden Streubilder das Partikel entweder aus unterschiedlichen Beleuchtungsrichtungen beleuchtet wird oder aus unterschiedlichen Beobachtungsrichtungen erfasst wird.

Das erfindungsgemäße Verfahren eignet sich insbesondere für einen Prüfling in Form eines Filters. Bei dem Partikel oder einer Mehrzahl von Partikeln auf der Oberfläche des Filters handelt es sich dann um Verunreinigungen. Gemäß einer Ausführungsform der Erfindung ist der Prüfling ein Partikelfilter, wobei das Partikel ein Partikel aus einem Metall oder ein Partikel aus einem Kunststoff ist.

In einer Ausführungsform der Erfindung enthält der Prüfling Zellulose, Polyester und/oder Nylon. In einer Ausführungsform der Erfindung besteht der Prüfling aus Papier.

In einer Ausführungsform der Erfindung ist der Prüfling abschnittsweise für die Anregungsstrahlung transparent. In diesen transparenten Bereichen des Prüflings ist die Lumineszenzleistung des Prüflings geringer als in den anderen Bereichen. Daher wird in einer Ausführungsform der Erfindung der Prüfling auf einen bei der Anregungswellenlänge fluoreszierenden Träger aufgebracht. Ein solcher Träger erzielt auch bei einem abschnittsweise transparenten Prüfling eine im Wesentlichen über die Fläche des Prüflings homogene Lumineszenzleistung. Gemäß einer Ausführungsform der vorliegenden Erfindung ist die Anregungswellenlänge aus einem Bereich von 260 nm bis 420 nm ausgewählt. Gängige Filtermaterialien zeigen etwa bei 365 nm eine starke Lumineszenz.

Zumindest eine der zuvor genannten Aufgaben wird auch durch ein System gemäß dem unabhängigen, auf das System gerichteten Anspruch gelöst. Dazu ist die Auswerteeinrichtung des Systems der eingangs genannten Art derart eingerichtet, dass die Auswerteeinrichtung in dem Betrieb des Systems einen Bereich des Lumineszenzbilds als ein Partikel auf der Oberfläche des Partikelfilters identifiziert, wenn eine Lumineszenzleistung des Bereichs kleiner ist als ein Lumineszenzleistungsschwellenwert.

Soweit im Folgenden Aspekte der Erfindung im Hinblick auf das System beschrieben werden, so gelten diese auch für das entsprechende Verfahren zum Prüfen einer Oberfläche eines Prüflings und optional zum Klassifizieren eines Partikels auf der Oberfläche und umgekehrt. Soweit das Verfahren mit einem System gemäß dieser Erfindung ausgeführt wird, so weist dieses System die entsprechenden Einrichtungen hierfür auf. Insbesondere sind Ausführungsformen des Systems zum Ausführen der zuvor beschriebenen Ausführungsformen des Verfahrens geeignet.

Die Anregungswellenlänge wird bestimmt durch die Ausgestaltung der Beleuchtungseinrichtung. In einer Ausführungsform der Erfindung ist die Beleuchtungseinrichtung eine Leuchtdiode.

Die Auswerteeinrichtung ist in einer Ausführungsform ein Rechner mit einem Prozessor, auf dem in dem Betrieb des Systems Algorithmen zur Auswertung von Signalen ablaufen.

Die Erfassungseinrichtung mit der Lumineszenzlichtkamera ist so auszugestalten, dass sie für die von dem Prüfling abgestrahlte Lumineszenzstrahlung sensitiv ist.

Gemäß einer Ausführungsform der Erfindung umfasst die Erfassungseinrichtung weiterhin eine Klassifikationseinrichtung zum Erfassen einer, vorzugsweise von der Lumineszenz verschiedenen, physikalischen Eigenschaften des Partikels, wobei die Auswerteeinrichtung derart mit der Erfassungseinrichtung verbunden ist, dass die Auswerteeinrichtung in dem Betrieb des Systems die physikalische Eigenschaft des Partikels empfängt und die Auswerteeinrichtung derart eingerichtet ist, dass die Auswerteeinrichtung in dem Betrieb des Systems das Partikel anhand der erfassten physikalischen Eigenschaft in mindestens eine erste und eine zweite Klasse einordnet.

Gemäß einer Ausführungsform der Erfindung ist die Klassifikationseinrichtung eine Streulichtkamera und die physikalische Eigenschaft des Partikels ist ein Reflexionsgrad des Partikels, wobei die Streulichtkamera derart angeordnet und eingerichtet ist, dass die Streulichtkamera in dem Betrieb des Systems ein Streulichtbild des Partikels bei der Anregungswellenlänge erfasst.

Gemäß einer Ausführungsform der vorliegenden Erfindung umfasst die Erfassungseinrichtung einen dichroitischen Strahlteiler, wobei der dichroitische Strahlteiler derart angeordnet und eingerichtet ist, dass der dichroitische Strahlteiler die Lumineszenzstrahlung mit der Lumineszenzwellenlänge auf die Lumineszenzkamera richtet und die Anregungsstrahlung mit der Anregungswellenlänge auf die Streulichtkamera richtet.

Gemäß einer weiteren Ausführungsform der vorliegenden Erfindung umfasst die Erfassungseinrichtung einen Strahlteiler, ein Lumineszenzlichtfilter und ein Streulichtfilter, wobei der Strahlteiler derart angeordnet und eingerichtet ist, dass der Strahlteiler von der Oberfläche des Prüflings stammende Strahlung auf die Lumineszenzkamera und auf die Streulichtkamera richtet, wobei das Lumineszenzlichtfilter in einer Strahlrichtung zwischen dem Strahlteiler und der Lumineszenzkamera angeordnet ist und die Lumineszenzstrahlung auf die Lumineszenzkamera richtet und die Anregungsstrahlung nicht auf die Lumineszenzkamera richtet und wobei das Streulichtfilter in einer Strahlrichtung zwischen dem Strahlteiler und der Streulichtkamera angeordnet ist und die Anregungsstrahlung auf die Streulichtkamera richtet und die Lumineszenzstrahlung nicht auf die Streulichtkamera richtet.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine schematische Querschnittsansicht einer Ausführungsform eines Systems zum Erkennen von Partikeln auf einer Oberfläche eines Prüflings sowie zum Klassifizieren der Partikel.
- Figur 2: ist eine schematische Querschnittsansicht einer zweiten Ausführungsform eines Systems zum Erkennen von Partikeln auf einer Oberfläche eines Prüflings und zum Klassifizieren des Partikels.
- Figur 3: ist eine schematische Querschnittsansicht eine Ausführungsform eines Systems zum Erkennen von Partikeln auf einer Oberfläche eines Prüflings.

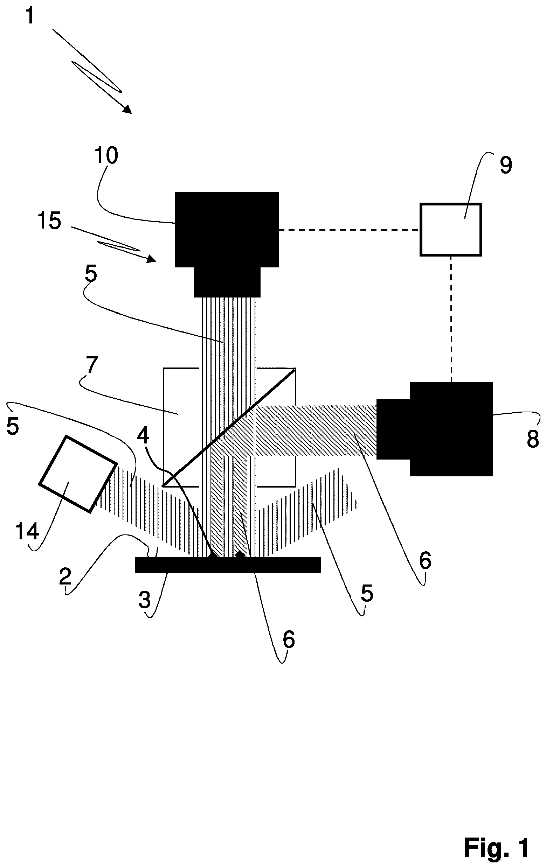

Die Figuren 1 bis 3 zeigen jeweils ein System 1 zum Prüfen einer Oberfläche 2 eines Prüflings. Mit beiden Varianten soll die Oberfläche 2 eines Partikelfilters 3 als Prüfling auf der Oberfläche vorhandene Partikel 4 geprüft werden. Dabei ermöglichen es die Systeme 1 gemäß den Figu-ren 1 und 2 nicht nur die individuellen Partikel 4 zu erkennen, sondern auch nach ihrem Material zu klassifizieren.

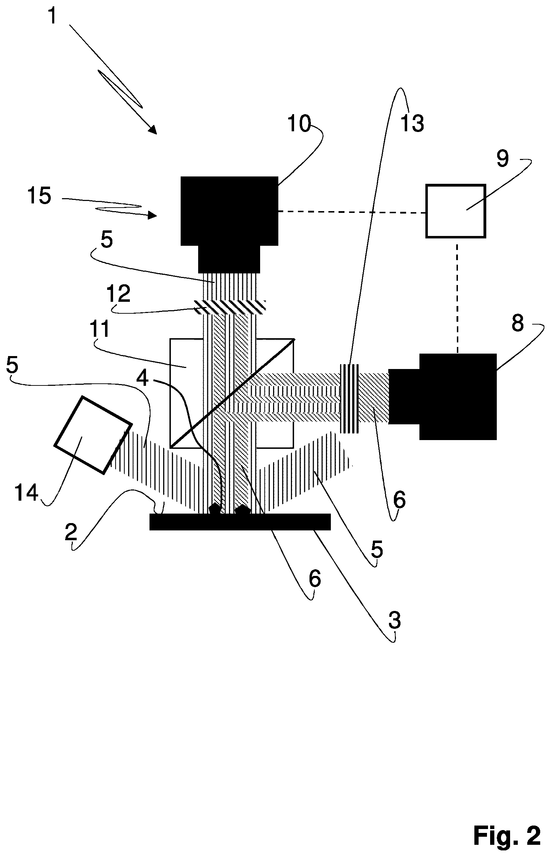

Für die hier diskutierten Beispiele wird davon ausgegangen, dass das Partikelfilter 3 Teil einer Extraktionseinheit zum Prüfen einer Batteriewanne aus Aluminium auf verbliebene Verunreinigungen ist. Das Partikelfilter ist in einem Strom einer wässrigen Lösung zum Extrahieren von Partikeln von der Oberfläche der Wanne nach dem eigentlichen Reinigungsvorgang angeordnet. Auf der Oberfläche 2 des Partikelfilters 3 befinden sich daher Partikel 4 entweder aus Kunststoff oder aus Aluminium. Mit anderen Worten ausgedrückt bestehen die Partikel aus zwei Partikelmaterialien, welche die zwei Klassen bilden, in die die Partikel beim Klassifizieren gemäß den Ausführungsformen der Figuren 1 und 2 eingeordnet werden.

Für das Erkennen der einzelnen Partikel 4 und für das Klassifizieren wird die Oberfläche 2 mit elektromagnetischer Anregungsstrahlung 5 beleuchtet. Die Anregungsstrahlung 5 wird von einer in den Figuren schematisch angedeuteten Beleuchtungseinrichtung 14 generiert.

Die Wellenlänge der Anregungsstrahlung 5 ist so gewählt, dass sie das Prüflingsmaterial, aus welchem das Partikelfilter 3 besteht, zur Lumineszenz anregt. Dabei fluoresziert das hier beispielhaft angeführte Prüflingsmaterial des Partikelfilters 3. In der dargestellten Ausführungsform hat die Anregungsstrahlung 5 eine Anregungswellenlänge von 365 nm. Das Partikelfilter 3 strahlt Lumineszenzstrahlung bei einer Wellenlänge von 380 nm bis 480 nm ab. Die von dem Partikelfilter 3 emittierte Lumineszenzstrahlung 6 bildet eine Lichtquelle für ein "Schattenbild", denn die auf der Oberfläche 2 angeordneten Partikel 4 generieren eine Abdeckung oder Abschattung der von dem Filter 3 gebildeten Quelle für die Lumineszenzstrahlung 6. Dies setzt voraus, dass das Partikelmaterial der auf der Oberfläche 2 vorhandenen Partikel 4 keine oder zumindest eine geringere Lumineszenz, im vorliegenden Beispiel eine geringere Fluoreszenz, aufweist als das Prüflingsmaterial des Partikelfilters 3.

Da nur ein Teil der Anregungsstrahlung 5 von dem Prüflingsmaterial des Partikelfilters 3 in Lumineszenzstrahlung 6 umgewandelt wird, wird auch ein Teil der Anregungsstrahlung 5 von der Oberfläche 2 des Filters, aber auch von den Partikeln 4 auf der Oberfläche 2 reflektiert. In einem Strahlengang in etwa senkrecht zu der Oberfläche 2 des Partikelfilters 3 ist bei der Ausführungsform aus Figur 1 ein dichroitischer Strahlteiler 7 vorgesehen. Dieser reflektiert die Lumineszenzstrahlung 6, während er die von der Oberfläche 2 und den Partikeln 4 reflektierte Anregungsstrahlung 5 transmittiert.

Die Lumineszenzstrahlung 6 wird von dem dichroitischen Strahlteiler 7 auf eine Lumineszenzlichtkamera 8 abgelenkt, welche ein Bild der Szenerie aus der Oberfläche des Prüflings 2 und den darauf befindlichen Partikeln 4 bei der Lumineszenzwellenlänge erzeugt. Ein solches Bild wird im Sinne der vorliegenden Anmeldung als Lumineszenzbild bezeichnet. Auf diesem Lumineszenzbild identifiziert eine mit der Lumineszenzlichtkamera verbundene Auswerteeinrichtung 9 Bereiche als die Partikel 4, wenn die Bereiche eine Lumineszenzleistung aufweisen, die kleiner ist als ein vorgegebener Lumineszenzleistungsschwellenwert. Für diese "dunkleren" Bereiche wird davon ausgegangen, dass dort die Oberfläche 2 des Partikelfilters 3 von einem Partikel abgedeckt ist. So lassen sich alle individuellen Partikel 4 auf der Oberfläche erkennen und ihre Position bestimmen.

Anhand des Lumineszenzbilds der Lumineszenzlichtkamera 8 sind damit alle Partikel 4 auf der Oberfläche 2 erkannt und können beispielsweise mithilfe einer Bildauswertung gezählt werden. Das Lumineszenzbild gibt jedoch in vielen Fällen keinen eindeutigen Aufschluss darüber, um welchen Typ von Partikeln es sich handelt. Es ist offen, ob das Partikel ein Metallpartikel oder ein Kunststoffpartikel ist.

Damit die einzelnen Partikel 4 auch nach ihrem Material klassifiziert werden können, ist in der von dem dichroitischen Strahlteiler 7 transmittierten Anregungsstrahlung 5 eine Streulichtkamera 10 angeordnet. Mit dieser Streulichtkamera 10 wird in einem weiteren Schritt des erfindungsgemäßen Verfahrens für jedes individuelle Partikel 4 auf der Oberfläche 2 erfasst, ob es sich um ein Metallpartikel oder um ein Kunststoffpartikel handelt.

Die Anordnung aus den beiden Kameras 8, 10 sowie dem Strahlteiler 7, 11 und/oder den Filtern 12, 13 wird zusammenfassend als Erfassungseinrichtung 15 bezeichnet.

Man kann davon ausgehen, dass die Oberfläche eines Partikels aus einem Kunststoffmaterial einen geringeren Glanz aufweist als ein Partikel aus einem Metall. Mit anderen Worten ausgedrückt, wird die Oberfläche des Kunststoffpartikels die auf sie auftreffende Anregungsstrahlung 5 im Wesentlichen homogen über alle Raumrichtungen hinweg reflektieren bzw. streuen. Aus einer Richtung betrachtet, erscheinen Kunststoffpartikel mit homogener Helligkeit. Demgegenüber kommt es statistisch bei Metallpartikeln zu einer ungleichen Verteilung der in einer Raumrichtung reflektierten Strahlung über die Oberfläche des Partikels hinweg. Metallpartikel erscheinen im Streulichtbild fleckig, d.h. mit inhomogener Helligkeitsverteilung. Zudem erscheinen Kunststoffpartikel in dem von der Streulichtkamera 10 aufgenommenen Streulichtbild insgesamt dunkler als die entsprechenden Metallpartikel. Auch bei der Auswertung des Streulichtbilds können also wieder Schwellenwerte gesetzt werden. Dann, wenn die Leistung oder Intensität in dem Streulichtbild über die Pixel eines Bereichs homogen und dunkel erscheint, an dem zuvor in dem Lumineszenzbild ein Partikel erkannt wurde, wird dieses Partikel in eine erste Klasse, welche die Klasse für die Kunststoffpartikel ist, einsortiert. Ist die Leistung oder Intensität in dem Streulichtbild über die Pixel eines Bereichs inhomogen und heller so wird das Partikel in eine zweite Klasse, welche die Klasse für die Metallpartikel ist, einsortiert.

Die Variante des Systems aus Figur 2 unterscheidet sich von der Ausführungsform aus Figur 1 dadurch, dass der dichroitische Strahlteiler 7 durch einen einfachen 50:50-Strahlteiler 11 ersetzt ist, sodass sowohl die Lumineszenzstrahlung 6 von dem Partikelfilter 3 als auch die von der Oberfläche 2 und den Partikeln 4 reflektierte Anregungsstrahlung 5 zu gleichen Teilen auf die beiden von dem Strahlteiler 11 gebildeten Kanäle aufgeteilt werden. Dafür sind in den Strahlengängen hinter dem Strahlteiler 11 zwei optische Filter angeordnet. Ein Lumineszenzlichtfilter 13 lässt nur die Lumineszenzstrahlung 6 auf die Lumineszenzkamera 8 durch und Streulichtfilter 12 lässt nur die Anregungsstrahlung 5 auf die Streulichtkamera 10 durch.

In einer nicht dargestellten Ausführungsform, können die Varianten aus den Figuren 1 und 2 kombiniert sein, wobei dann bei der Ausführungsform aus Figur 1 zusätzlich in den von dem dichroitischen Strahlteiler 7 gebildeten Strahlengängen vor den Kameras 8, 10 die entsprechenden Filter 12, 13 angeordnet sind. Eine solche Anordnung weist ein verbessertes Signal-Rausch-Verhältnis für die beiden von den Kameras 10, 8 erzeugten Bilder auf, verglichen mit den beiden in den Figuren 1 und 2 gezeigten Varianten.

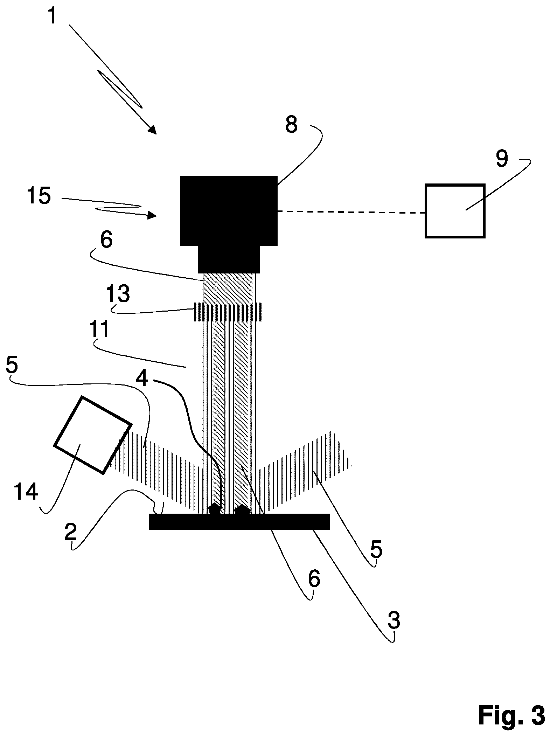

Figur 3 zeigt eine Variante des Systems 1, die es ermöglicht, die Partikel 4 zu erkennen und zu quantifizieren, wie viele Partikel 4 insgesamt auf der Oberfläche vorhanden sind. Demgegenüber ermöglichen es diese Variante des Systems 1 anders als die Varianten der Figuren 1 und 2 nicht, die Partikel auch individuell nach ihrem Partikelmaterial zu klassifizieren. Daher kommt Erfassungseinrichtung 15 des Systems 1 aus Figur 3 ohne einen Strahlteiler 7, 11 und ohne die Streulichtkamera 10 aus. Lediglich vor der Lumineszenzlichtkamera 8 ist ein Lumineszenzlichtfilter 12 vorgesehen. Ein solches kann aber entfallen, wenn die Lumineszenzlichtkamera 8 einen hinreichend eingeschränkten Sensitivitätsbereich aufweist, so dass gleichzeitig mit der Lumineszenzstrahlung 6 auf die Lumineszenzlichtkamera 8 treffende Streustrahlung nicht erfasst wird. In der gezeigten Ausführungsform wird das Lumineszenzbild zusätzlich zum Erkennen der Partikel 4 auch zu einem Klassifizieren der Partikel 4 nach ihrer Größe verwendet. Dazu wird das Lumineszenzbild mit Hilfe einer auf der Auswerteeinrichtung 9 ablaufenden Bildverarbeitungssoftware ausgewertet und die Größen der einzelnen Partikel 4 bestimmt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Oberfläche
- 3: Partikelfilter
- 4: Partikel
- 5: Anregungsstrahlung
- 6: Lumineszenzstrahlung
- 7: dichroitischer Strahlteiler
- 8: Lumineszenzlichtkamera
- 9: Auswerteeinrichtung
- 10: Streulichtkamera
- 11: Strahlteiler
- 12: Lumineszenzlichtfilter
- 13: Streulichtfilter
- 14: Beleuchtungseinrichtung
- 15: Erfassungseinrichtung

## Patentansprüche

1. Verfahren zum Prüfen einer Oberfläche (2) eines Prüflings (3), wobei das Verfahren umfasst
Erkennen eines Partikels (4) auf der Oberfläche (2) mit den Schritten
Beleuchten der Oberfläche (2) und des Partikels (4) mit elektromagnetischer Anregungsstrahlung (5) mit einer Anregungswellenlänge,
Erfassen einer ortsaufgelösten Lumineszenzleistung einer von dem Prüfling (3) abgestrahlten Lumineszenzstrahlung (6) mit einer von der Anregungswellenlänge verschiedenen Lumineszenzwellenlänge und
Erzeugen eines Lumineszenzbilds aus der ortsaufgelösten Lumineszenzleistung,
wobei der Prüfling (3) ein Prüflingsmaterial umfasst und das Partikel (4) ein Partikelmaterial umfasst,
**dadurch gekennzeichnet, dass**
das Prüflingsmaterial bei der Anregungswellenlänge stärker luminesziert als das Partikelmaterial und
das Erkennen des Partikels (4) den Schritt umfasst
Identifizieren eines Bereichs des Lumineszenzbilds als das Partikel (4), wenn eine Lumineszenzleistung des Bereichs kleiner ist als ein Lumineszenzleistungsschwellenwert.

2. Verfahren nach dem vorhergehenden Anspruch, wobei das Verfahren weiterhin ein Klassifizieren des auf der Oberfläche (2) identifizierten Partikels (4) umfasst, wobei das Klassifizieren die Schritte aufweist
Erfassen einer, vorzugsweise von der Lumineszenzleistung verschiedenen, physikalischen Eigenschaft des Partikels (4) und
Einordnen des Partikels (4) in mindestens eine erste und eine zweite Klasse anhand der erfassten physikalischen Eigenschaft.

3. Verfahren nach dem vorhergehenden Anspruch, wobei die physikalische Eigenschaft eine optische Eigenschaft des Partikels (4) ist, wobei die optische Eigenschaft vorzugsweise ausgewählt ist aus einem Reflexionsgrad, einem Polarisationsgrad, einer wellenlängenabhängigen Absorption, einer wellenlängenabhängigen Reflexion und einer Lumineszenzlebensdauer.

4. Verfahren nach Anspruch 2 oder 3, wobei für das Klassifizieren des Partikels die von dem Partikel (4) reflektierte oder gestreute Anregungsstrahlung (5) erfasst wird.

5. Verfahren nach dem vorhergehenden Anspruch, wobei für das Klassifizieren ein Streubild des Partikels (4) bei der Anregungswellenlänge erfasst wird.

6. Verfahren nach Anspruch 4 oder 5, wobei die von dem Partikel (4) in einer Richtung im Wesentlichen senkrecht zu der Oberfläche (2) des Prüflings (3) reflektierte oder gestreute Anregungsstrahlung (5) erfasst wird.

7. Verfahren nach Anspruch 5 oder 6, wobei
das Beleuchten der Oberfläche (2) mit dem Partikel (4) mit der Anregungsstrahlung (5) ein Beleuchten mit einer bezogen auf die Oberfläche (2) ersten Beleuchtungsrichtung und ein Beleuchten mit einer bezogen auf die Oberfläche (2) zweiten Beleuchtungsrichtung umfasst,
das Erfassen der von dem Partikel reflektierten oder gestreuten Anregungsstrahlung (5) die Schritte umfasst
Erfassen eines ersten Streubilds des von der Anregungsstrahlung (5) aus der ersten Beleuchtungsrichtung beleuchteten Partikels (4) mit einer bezogen auf das Partikel (4) ersten Beobachtungsrichtung und Erfassen eines zweiten Streubilds des von der Anregungsstrahlung aus der zweiten Beleuchtungsrichtung beleuchteten Partikels (4) mit einer bezogen auf das Partikel (4) zweiten Beobachtungsrichtung,
wobei entweder
a) die erste Beleuchtungsrichtung und die zweite Beleuchtungsrichtung voneinander verschieden sind sowie die erste Beobachtungsrichtung und die zweite Beobachtungsrichtung gleich sind
oder
b) die erste Beleuchtungsrichtung und die zweite Beleuchtungsrichtung gleich sind sowie die erste Beobachtungsrichtung und die zweite Beobachtungsrichtung voneinander verschieden sind, und
wobei das Einordnen des Partikels (4) in mindestens die erste und die zweite Klasse die Schritte umfasst
Berechnen eines Maßes für eine Ähnlichkeit zwischen dem ersten Streubild und dem zweiten Streubild und
Einordnen des Partikels (4) in mindestens die erste und die zweite Klasse anhand des berechneten Maßes für die Ähnlichkeit.

8. Verfahren nach einem der vorhergehenden Ansprüche, wobei der Prüfling abschnittsweise transparent ist und der Prüfling auf einen bei der Anregungswellenlänge fluoreszierenden Träger aufgebracht wird.

9. Verfahren nach einem der vorhergehenden Ansprüche, wobei die Anregungswellenlänge aus einem Bereich von 260 nm bis 420 nm ausgewählt ist.

10. Verfahren nach einem der vorhergehenden Ansprüche, wobei der Prüfling ein Partikelfilter ist, wobei das Partikel ein Partikel aus einem Metall oder ein Partikel aus einem Kunststoff ist.

11. System (1) zum Prüfen einer Oberfläche (2) eines Partikelfilters (3), wobei das System (1) aufweist
eine Beleuchtungseinrichtung (14),
eine Erfassungseinrichtung (15) mit einer Lumineszenzlichtkamera (8) und
eine Auswerteeinrichtung (9),
wobei die Beleuchtungseinrichtung (14) derart eingerichtet und angeordnet ist, dass in einem Betrieb des Systems (1) die Oberfläche (2) mit elektromagnetischer Anregungsstrahlung (5) mit einer Anregungswellenlänge beleuchtbar ist,
wobei die Erfassungseinrichtung (15) derart eingerichtet ist, dass mit der Lumineszenzlichtkamera (8) in dem Betrieb des Systems (1) ein Lumineszenzbild einer von dem Partikelfilter (3) abgestrahlten Lumineszenzstrahlung (6) mit einer Lumineszenzwellenlänge erfassbar ist, wobei die Lumineszenzwellenlänge von der Anregungswellenlänge verschieden ist,
wobei die Auswerteeinrichtung (9) derart wirksam mit der Erfassungseinrichtung (15) verbunden ist, dass die Auswerteeinrichtung (9) in dem Betrieb des Systems (1) das Lumineszenzbild von der Erfassungseinrichtung (15) empfängt,
**dadurch gekennzeichnet, dass**
die Auswerteeinrichtung (9) derart eingerichtet ist, dass die Auswerteeinrichtung (9) in dem Betrieb des Systems (1) einen Bereich des Lumineszenzbilds als ein Partikel (4) auf der Oberfläche (2) identifiziert, wenn eine Lumineszenzleistung des Bereichs kleiner ist als ein Lumineszenzleistungsschwellenwert.

12. System (1) nach dem vorhergehenden Anspruch, wobei die Erfassungseinrichtung (15) weiterhin eine Klassifikationseinrichtung (10) zum Erfassen einer, vorzugsweise von der Lumineszenz verschiedenen, physikalischen Eigenschaft des Partikels (4) umfasst, wobei die Auswerteeinrichtung (9) derart wirksam mit der Erfassungseinrichtung (15) verbunden ist, dass die Auswerteeinrichtung (9) in dem Betrieb des Systems (1) die physikalische Eigenschaft des Partikels (4) empfängt, und die Auswerteeinrichtung (9) derart eingerichtet ist, dass die Auswerteeinrichtung (9) in dem Betrieb des Systems (1) das Partikel (4) anhand der erfassten physikalischen Eigenschaft in mindestens eine erste und eine zweite Klasse einordnet.

13. System (1) nach dem vorhergehenden Anspruch, wobei die Klassifikationseinrichtung (10) eine Streulichtkamera (10) ist und die physikalische Eigenschaft des Partikels ein Reflexionsgrad des Partikels (4) ist, wobei die Streulichtkamera (10) derart angeordnet und eingerichtet ist, dass die Streulichtkamera (10) in dem Betrieb des Systems (1) ein Streulichtbild des Partikels bei der Anregungswellenlänge erfasst.

14. System (1) nach dem vorhergehenden Anspruch, wobei die Erfassungseinrichtung (15) einen dichroitischen Strahlteiler (7) umfasst, wobei der dichroitische Strahlteiler (7) derart angeordnet und eingerichtet ist, dass der dichroitische Strahlteiler (7) die Lumineszenzstrahlung mit der Lumineszenzwellenlänge auf die Lumineszenzkamera (8) richtet und die Anregungsstrahlung mit der Anregungswellenlänge auf die Streulichtkamera (10) richtet.

15. System (1) nach Anspruch 13 oder 14, wobei die Erfassungseinrichtung (15) einen Strahlteiler (11), ein Lumineszenzlichtfilter (13) und ein Streulichtfilter (12) umfasst, wobei der Strahlteiler (11) derart angeordnet und eingerichtet ist, dass der Strahlteiler (11) von der Oberfläche (2) des Prüflings (3) stammende Strahlung auf die Lumineszenzkamera (8) und auf die Streulichtkamera (10) richtet, wobei das Lumineszenzlichtfilter (13) in einer Strahlrichtung zwischen dem Strahlteiler (11) und der Lumineszenzkamera (8) angeordnet ist und die Lumineszenzstrahlung (6) auf die Lumineszenzkamera richtet und die Anregungsstrahlung (5) nicht auf die Lumineszenzkamera richtet und wobei das Streulichtfilter (12) in einer Strahlrichtung zwischen dem Strahlteiler (11) und der Streulichtkamera (10) angeordnet ist und die Anregungsstrahlung (5) auf die Streulichtkamera (10) richtet und die Lumineszenzstrahlung (6) nicht auf die Streulichtkamera (10) richtet.

## Claims

1. A method for inspecting a surface (2) of a test specimen (3), the method comprising detecting a particle (4) on the surface (2), comprising the steps of
illuminating the surface (2) and the particle (4) by electromagnetic excitation radiation (5) having an excitation wavelength,
detecting a spatially resolved luminescence power of luminescence radiation (6) emitted by the test specimen (3) at a luminescence wavelength different from the excitation wavelength, and
generating a luminescence image from the spatially resolved luminescence power, wherein the test specimen (3) comprises a test specimen material and the particle (4) comprises a particle material,
**characterised in that**
the test specimen material luminesces more strongly at the excitation wavelength than the particle material, and
detecting the particle (4) comprises the step
identifying a region of the luminescence image as the particle (4) if a luminescence power of the region is less than a luminescence power threshold.

2. The method according to the preceding claim, wherein the method further comprises classifying the particle (4) identified on the surface (2), wherein classifying comprises the steps
detecting a physical property of the particle (4), preferably different from the luminescence power, and
ranking the particle (4) into at least a first and a second class based on the detected physical property.

3. The method according to the preceding claim, wherein the physical property is an optical property of the particle (4), wherein the optical property is preferably selected from a reflectance, a degree of polarisation, wavelength-dependent absorption, wavelength-dependent reflection and a luminescence lifetime.

4. The method according to claim 2 or 3, wherein, for classifying the particle, the excitation radiation (5) reflected or scattered by the particle (4) is detected.

5. The method according to the preceding claim, wherein, for classifying, a scattering image of the particle (4) at the excitation wavelength is detected.

6. The method according to claim 4 or 5, wherein the excitation radiation (5) reflected or scattered by the particle (4) in a direction substantially perpendicular to the surface (2) of the test specimen (3) is detected.

7. The method according to claim 5 or 6, wherein
illuminating the surface (2) comprising the particle (4) using the excitation radiation (5) comprises illuminating in a first illumination direction relative to the surface (2) and illuminating in a second illumination direction relative to the surface (2), detecting of the excitation radiation (5) reflected or scattered by the particle comprises the steps
detecting a first scattering image of the particle (4) illuminated by the excitation radiation (5) from the first illumination direction in a first observation direction relative to the particle (4), and
detecting a second scattering image of the particle (4) illuminated by the excitation radiation from the second illumination direction in a second observation direction relative to the particle (4),
wherein either
a) the first illumination direction and the second illumination direction are different from one another, and the first observation direction and the second observation direction are the same
or
b) the first illumination direction and the second illumination direction are the same, and the first observation direction and the second observation direction are different from one another, and
wherein ranking the particle (4) into at least the first and second classes comprises the steps of
calculating a measure of similarity between the first scattering image and the second scattering image, and
ranking the particle (4) into at least the first and second classes on the basis of the calculated measure of similarity.

8. The method according to any one of the preceding claims, wherein the test specimen is transparent in sections and the test specimen is applied to a substrate that fluoresces at the excitation wavelength.

9. The method according to any one of the preceding claims, wherein the excitation wavelength is selected from a range of 260 nm to 420 nm.

10. The method according to any one of the preceding claims, wherein the test specimen is a particulate filter, wherein the particle is a metal particle or a plastic particle.

11. A system (1) for inspecting a surface (2) of a particle filter (3), wherein the system (1) comprises
an illumination device (14),
a detection device (15) comprising a luminescence camera (8) and
an evaluation device (9),
wherein the illumination device (14) is configured and arranged such that, during operation of the system (1), the surface (2) can be illuminated by electromagnetic excitation radiation (5) having an excitation wavelength,
wherein the detection device (15) is configured such that, during operation of the system, (1), a luminescence image of luminescence radiation (6) emitted by the particle filter (3) with a luminescence wavelength can be detected, wherein the luminescence wavelength differs from the excitation wavelength,
wherein the evaluation device (9) is operatively connected to the detection device (15) such that, during operation of the system (1), the evaluation device (9) receives the luminescence image from the detection device (15),
**characterised in that**
the evaluation device (9) is configured such that, during operation of the system (1), the evaluation device (9) identifies a region of the luminescence image as a particle (4) on the surface (2) if a luminescence power of the region is less than a luminescence power threshold.

12. The system (1) according to the preceding claim, wherein the detection device (15) further comprises a classification device (10) for detecting a physical property of the particle (4), he physical property preferably being different from the luminescence, wherein the evaluation device (9) is operatively connected to the detection device (15) such that, during operation of the system (1), the evaluation device (9) receives the physical property of the particle (4), and the evaluation device (9) is configured such that, during operation of the system (1), the evaluation device (9) ranks the particle (4) into at least a first and a second class on the basis of the detected physical property.

13. The system (1) according to the preceding claim, wherein the classification device (10) is a scattered light camera (10) and the physical property of the particle is a reflectance of the particle (4), wherein the scattered light camera (10) is arranged and configured such that, during operation of the system (1), the scattered light camera (10) captures a scattered light image of the particle at the excitation wavelength.

14. The system (1) according to the preceding claim, wherein the detection device (15) comprises a dichroic beam splitter (7), wherein the dichroic beam splitter (7) is arranged and configured such that the dichroic beam splitter (7) directs the luminescence radiation at the luminescence wavelength onto the luminescence camera (8) and directs the excitation radiation at the excitation wavelength onto the scattered light camera (10).

15. The system (1) according to claim 13 or 14, wherein the detection device (15) comprises a beam splitter (11), a luminescence light filter (13) and a scattered light filter (12), wherein the beam splitter (11) is arranged and configured such that the beam splitter (11) directs radiation originating from the surface (2) of the test specimen (3) onto the luminescence camera (8) and onto the scattered light camera (10), wherein the luminescence light filter (13) is arranged in a beam path between the beam splitter (11) and the luminescence camera (8) and directs the luminescence radiation (6) onto the luminescence camera whilst not directing the excitation radiation (5) is not directed onto the luminescence camera, and wherein the scattered light filter (12) is arranged in a beam path between the beam splitter (11) and the scattered light camera (10) and directs the excitation radiation (5) onto the scattered light camera (10) and does not direct the luminescence radiation (6) onto the scattered light camera (10).

## Revendications

1. Procédé de contrôle d'une surface (2) d'un échantillon (3), dans lequel le procédé comprend
la reconnaissance d'une particule (4) sur la surface (2) avec les étapes d'éclairement de la surface (2) et de la particule (4) avec un rayonnement d'excitation (5) électromagnétique avec une longueur d'onde d'excitation,
de détection d'une puissance de luminescence à résolution spatiale d'un rayonnement de luminescence (6) rayonné par l'échantillon (3) avec une longueur d'onde de luminescence différente de la longueur d'onde d'excitation et
de génération d'une image de luminescence à partir de la puissance de luminescence à résolution spatiale,
dans lequel l'échantillon (3) comprend un matériau d'échantillon et la particule (4) comprend un matériau de particule,
**caractérisé en ce que**
le matériau d'échantillon est plus fortement luminescent que le matériau de particule à la longueur d'onde d'excitation et
la reconnaissance de la particule (4) comprend l'étape
d'identification d'une région de l'image de luminescence comme la particule (4) si une puissance de luminescence de la région est inférieure à une valeur seuil de puissance de luminescence.

2. Procédé selon la revendication précédente, dans lequel le procédé comprend en outre un classement de la particule (4) identifiée sur la surface (2), dans lequel le classement présente les étapes
de détection d'une propriété physique de la particule (4), de préférence différente de la puissance de luminescence, et
de rangement de la particule (4) dans au moins une première et une seconde classe sur la base de la propriété physique détectée.

3. Procédé selon la revendication précédente, dans lequel la propriété physique est une propriété optique de la particule (4), dans lequel la propriété optique est de préférence choisie parmi un degré de réflexion, un degré de polarisation, une absorption dépendante de la longueur d'onde, une réflexion dépendante de la longueur d'onde et une durée de vie de luminescence.

4. Procédé selon la revendication 2 ou 3, dans lequel le rayonnement d'excitation (5) réfléchi ou diffusé par la particule (4) est détecté pour le classement de la particule.

5. Procédé selon la revendication précédente, dans lequel, pour le classement, une image de diffusion de la particule (4) est détectée à la longueur d'onde d'excitation.

6. Procédé selon la revendication 4 ou 5, dans lequel le rayonnement d'excitation (5) réfléchi ou diffusé par la particule (4) est détecté dans une direction sensiblement perpendiculaire à la surface (2) de l'échantillon (3).

7. Procédé selon la revendication 5 ou 6, dans lequel
l'éclairement de la surface (2) avec la particule (4) avec le rayonnement d'excitation (5) comprend un éclairement avec une première direction d'éclairage par rapport à la surface (2) et un éclairement avec une seconde direction d'éclairage par rapport à la surface (2),
la détection du rayonnement d'excitation (5) réfléchi ou diffusé par la particule comprend les étapes
de capture d'une première image de diffusion de la particule (4) éclairée par le rayonnement d'excitation (5) à partir de la première direction d'éclairage avec une première direction d'observation par rapport à la particule (4) et
de capture d'une seconde image de diffusion de la particule (4) éclairée par le rayonnement d'excitation à partir de la seconde direction d'éclairage avec une seconde direction d'observation par rapport à la particule (4),
dans lequel soit
a) la première direction d'éclairage et la seconde direction d'éclairage sont différentes l'une de l'autre et la première direction d'observation et la seconde direction d'observation sont identiques soit
b) la première direction d'éclairage et la seconde direction d'éclairage sont identiques et la première direction d'observation et la seconde direction d'observation sont différentes l'une de l'autre, et
dans lequel le rangement de la particule (4) dans au moins la première et la seconde classe comprend les étapes
de calcul d'une mesure de similitude entre la première image de diffusion et la seconde image de diffusion et
de rangement de la particule (4) dans au moins la première et la seconde classe à l'aide de la mesure calculée pour la similitude.

8. Procédé selon l'une quelconque des revendications précédentes, dans lequel l'échantillon est transparent par sections et l'échantillon est appliqué sur un support fluorescent à la longueur d'onde d'excitation.

9. Procédé selon l'une quelconque des revendications précédentes, dans lequel la longueur d'onde d'excitation est choisie dans une plage de 260 nm à 420 nm.

10. Procédé selon l'une quelconque des revendications précédentes, dans lequel l'échantillon est un filtre à particules, dans lequel la particule est une particule composée d'un métal ou une particule composée d'un plastique.

11. Système (1) de contrôle d'une surface (2) d'un filtre à particules (3), dans lequel le système (1) présente
un dispositif d'éclairage (14),
un dispositif de détection (15) avec une caméra de lumière de luminescence (8) et
un dispositif d'évaluation (9),
dans lequel le dispositif d'éclairage (14) est configuré et agencé de sorte que lors d'un fonctionnement du système (1), la surface (2) peut être éclairée avec un rayonnement d'excitation (5) électromagnétique avec une longueur d'onde d'excitation,
dans lequel le dispositif de détection (15) est configuré de sorte qu'une image de luminescence d'un rayonnement de luminescence (6) rayonné par le filtre à particules (3) avec une longueur d'onde de luminescence soit détectable avec la caméra de lumière de luminescence (8) lors d'un fonctionnement du système (1), dans lequel la longueur d'onde de luminescence est différente de la longueur d'onde d'excitation,
dans lequel le dispositif d'évaluation (9) est en liaison fonctionnelle avec le dispositif de détection (15) de sorte que le dispositif d'évaluation (9) reçoit l'image de luminescence du dispositif de détection (15) lors du fonctionnement du système (1),
**caractérisé en ce que**
le dispositif d'évaluation (9) est configuré de sorte que le dispositif d'évaluation (9) identifie, lors du fonctionnement du système (1), une région de l'image de luminescence comme une particule (4) sur la surface (2), si une puissance de luminescence de la région est inférieure à une valeur de seuil de puissance de luminescence.

12. Système (1) selon la revendication précédente, dans lequel le dispositif de détection (15) comprend en outre un dispositif de classification (10) pour détecter une propriété physique de la particule (4), de préférence différente de la luminescence, dans lequel le dispositif d'évaluation (9) est en liaison fonctionnelle avec le dispositif de détection (15) de sorte que le dispositif d'évaluation (9) reçoit la propriété physique de la particule (4) lors du fonctionnement du système (1), et le dispositif d'évaluation (9) est configuré de sorte que le dispositif d'évaluation (9) range la particule (4) dans au moins une première et une seconde classe lors du fonctionnement du système (1) sur la base de la propriété physique détectée.

13. Système (1) selon la revendication précédente, dans lequel le dispositif de classification (10) est une caméra de lumière diffusée (10) et la propriété physique de la particule est un degré de réflexion de la particule (4), dans lequel la caméra de lumière diffusée (10) est agencée et configurée de sorte que la caméra de lumière diffusée (10) capture une image de lumière diffusée de la particule à la longueur d'onde d'excitation lors du fonctionnement du système (1).

14. Système (1) selon la revendication précédente, dans lequel le dispositif de détection (15) comprend un séparateur de faisceau dichroïque (7), dans lequel le séparateur de faisceau dichroïque (7) est agencé et configuré de sorte que le séparateur de faisceau dichroïque (7) dirige le rayonnement de luminescence avec la longueur d'onde de luminescence vers la caméra de luminescence (8) et dirige le rayonnement d'excitation avec la longueur d'onde d'excitation vers la caméra de lumière diffusée (10).

15. Système (1) selon la revendication 13 ou 14, dans lequel le dispositif de détection (15) comprend un séparateur de faisceau (11), un filtre de lumière de luminescence (13) et un filtre de lumière diffusée (12), dans lequel le séparateur de faisceau (11) est agencé et configuré de sorte que le séparateur de faisceau (11) dirige le rayonnement provenant de la surface (2) de l'échantillon (3) vers la caméra de luminescence (8) et vers la caméra de lumière diffusée (10), dans lequel le filtre de lumière de luminescence (13) est agencé dans une direction de faisceau entre le séparateur de faisceau (11) et la caméra de luminescence (8) et le rayonnement de luminescence (6) est dirigé vers la caméra de luminescence et le rayonnement d'excitation (5) n'est pas dirigé vers la caméra de luminescence et dans lequel le filtre de lumière diffusée (12) est agencé dans une direction de faisceau entre le séparateur de faisceau (11) et la caméra de lumière diffusée (10) et le rayonnement d'excitation (5) est dirigé vers la caméra de lumière diffusée (10) et le rayonnement de luminescence (6) n'est pas dirigé vers la caméra de lumière diffusée (10).
